# DEMANDE DE BREVET EUROPEEN

(11) **EP 4 759 683 A1**
(43) Date de publication de la demande: **17.06.2026**
(21) Numéro de dépôt: 25222864.8
(22) Date de dépôt: 12.12.2025
(51) Int. Cl.: B62D 27/02, B62D 67/00

(54) **PIÈCE DE CARROSSERIE POUR VÉHICULE AUTOMOBILE**

(30) Priorité: 13.12.2024 FR 2414039
(71) Demandeur: OPmobility SE, 69007 Lyon (FR)
(72) Inventeur: BRIAND, Benoît, 01150 Sainte-Julie (FR); CRETIER, Romain, 01150 Sainte-Julie (FR); LETERRIER, Franck, 01150 Sainte-Julie (FR)
(74) Mandataire: LLR

(57) **Abrégé**

Cette pièce de carrosserie (2) pour véhicule automobile comprend :
- un premier panneau (4),
- un second panneau (6) collé au premier panneau (4) au moyen d'une colle (8),
- au moins un interstice (10) entre le premier panneau (4) et le second panneau (6), le premier panneau (4) et le second panneau (6) étant situés à une distance D l'un de l'autre dans l'au moins un interstice (10), et
- au moins une enveloppe expansible (18) s'étendant dans l'au moins un interstice (10), l'au moins une enveloppe expansible (18) étant dimensionnée de manière à pouvoir occuper un état dégonflé, dans lequel elle présente une envergure E₁, et un état gonflé, dans lequel elle présente une envergure E₂ strictement supérieure à la distance D et strictement supérieure à E₁.

## Description

### Domaine technique

L'invention concerne les pièces de véhicules automobile. Plus particulièrement, l'invention concerne une pièce de carrosserie pour véhicule automobile et un procédé de démontage d'une telle pièce de carrosserie.

### État de la technique

Un véhicule automobile comprend plusieurs pièces de carrosserie qui composent sa carrosserie. Chacune de ces pièces peut être réalisée sous la forme de plusieurs sous-pièces connectées entre elles. Par exemple, une pièce de carrosserie peut comprendre un premier panneau et un second panneau, ce second panneau étant fixé au premier panneau au moyen d'une colle. Dans cette configuration, le premier panneau est situé du côté extérieur du véhicule, et le second panneau est situé du côté intérieur du véhicule. De la sorte, le premier panneau est visible de l'extérieur du véhicule, tandis que le second panneau est au moins en partie caché par le premier panneau.

Une telle pièce de carrosserie est amenée à être démontée pour diverses raisons. Par exemple, si le premier panneau est endommagé, il doit être décollé du second panneau afin de procéder à son remplacement par un panneau neuf. Un autre exemple consiste à séparer les deux panneaux pour faciliter leur recyclage lors de leur fin de vie. Afin de réaliser ce démontage, une technique connue consiste à utiliser un fil pour découper la colle qui fixe le premier panneau au second panneau. On peut également mentionner les diverses opérations de maintenance de la pièce de carrosserie.

Cette technique faisant intervenir un fil permet effectivement de séparer le premier panneau du second panneau et donc de démonter la pièce de carrosserie, néanmoins elle présente certains inconvénients. En effet, pour permettre au fil d'accéder à la colle et pour permettre à un opérateur ou une machine de manipuler le fil pour découper la colle, il est nécessaire de fortement détériorer le premier panneau. Or il est préférable d'éviter, ou à tout le moins d'atténuer, une telle détérioration car elle est nuisible pour des opérations de maintenance sur la pièce de carrosserie car celles-ci n'ont pas vocation à remplacer le premier ou le second panneau. En outre, le découpage de la colle au moyen du fil est une opération généralement fastidieuse et chronophage, si bien que cette technique n'est pas entièrement satisfaisante. De plus, le découpage de la colle au moyen du fil nécessite d'appliquer une certaine force avec le fil pour couper la colle, ce qui représente un risque de blessure pour l'opérateur en cas de mauvaise manipulation du fil.

L'invention a notamment pour but de remédier à ces problèmes en fournissant une pièce de carrosserie permettant un démontage de celle-ci qui soit à la fois moins sujette à la détériorer et plus simple et plus sûre à mettre en œuvre.

### Résumé de l'invention

A cet effet l'invention a pour objet une pièce de carrosserie pour véhicule automobile, comprenant :
- un premier panneau,
- un second panneau collé au premier panneau au moyen d'une colle,
- au moins un interstice entre le premier panneau et le second panneau, le premier panneau et le second panneau étant situés à une distance D l'un de l'autre dans l'au moins un interstice, et
- au moins une enveloppe expansible s'étendant dans l'au moins un interstice, l'au moins une enveloppe expansible étant dimensionnée de manière à pouvoir occuper un état dégonflé, dans lequel elle présente une envergure E₁, et un état gonflé, dans lequel elle présente une envergure E₂ strictement supérieure à la distance D et strictement supérieure à E₁. De préférence, l'envergure E₁ est inférieure ou égale à la distance D.

La pièce de carrosserie comprend ainsi une enveloppe expansible prévue entre le premier et le second panneau. En gonflant l'enveloppe expansible avec un fluide, tel que de l'air ou un liquide, on augmente son volume jusqu'à ce qu'elle appuie contre le premier panneau et écarte les panneaux l'un de l'autre. Cet écartement déforme la colle jusqu'à la séparation du premier panneau et du second panneau. Cette séparation peut se faire sur la surface supérieure de la colle, sur la surface inférieure de la colle, ou bien à l'intérieur de la colle. Dès lors, le démontage de la pièce de carrosserie selon l'invention est réalisé par une simple opération d'expansion de l'enveloppe expansible. On comprend ainsi que cette pièce de carrosserie permet, grâce à l'enveloppe expansible, un démontage particulièrement simple et rapide à réaliser en comparaison avec la technique faisant intervenir un fil, présentée plus haut, tout en évitant les risques de blessure liés à la manipulation du fil. De plus, l'expansion de l'enveloppe expansible peut être réalisé sans qu'il ne soit nécessaire de détériorer le premier panneau pour pouvoir faire passer un fil, si bien que la pièce de carrosserie selon l'invention permet un démontage moins destructif qu'une pièce de carrosserie plus conventionnelle.

Suivant des modes de réalisation alternatifs de l'invention :
- l'au moins une enveloppe expansible est de forme générale de tube de section droite constante. Elle présente ainsi deux extrémités longitudinales fermant l'enveloppe expansible. L'enveloppe expansible est ainsi réalisée de manière particulièrement simple, et présente une forme facilement intégrable dans la pièce de carrosserie.
- l'au moins une enveloppe expansible est en forme générale de tube de section droite constante fermé sur lui-même. L'enveloppe expansible présente par exemple une forme similaire à celle d'un tore, dont la section droite n'est pas nécessairement de forme circulaire, ou d'une chambre à air pour roue de vélocipède, de sorte que l'enveloppe expansible forme, dans son volume interne, une cavité en boucle continue. L'enveloppe expansible est ainsi réalisée de manière particulièrement simple, et présente une forme facilement intégrable dans la pièce de carrosserie.

Avantageusement, l'au moins une enveloppe expansible est munie d'un embout d'expansion.

Un tel embout d'expansion permet de se raccorder facilement à des moyens d'injection, tels qu'une buse, pour réaliser l'expansion de l'enveloppe expansible en y injectant un fluide ou de la mousse. En l'absence d'un tel embout d'expansion, l'expansion de l'enveloppe expansible est par exemple réalisée à l'aide de moyens d'injection comprenant une aiguille configurée pour percer l'enveloppe expansible et y injecter un fluide ou de la mousse.

Avantageusement, la pièce de carrosserie comprend une enveloppe primaire et une enveloppe secondaire.

Les deux enveloppes expansibles peuvent être gonflées simultanément pour séparer le second panneau du premier panneau selon une cinématique prédéterminée. Les deux enveloppes expansibles permettent ainsi de mieux maitriser la séparation des premier et second panneaux.

De préférence, l'enveloppe expansible primaire et l'enveloppe expansible secondaire sont toutes deux en forme générale de tube fermé sur lui-même de section droite constante, et s'étendent, localement, l'une parallèlement à l'autre.

Les enveloppes expansibles sont ainsi réalisées de manière particulièrement simple et peu onéreuse, et présentent une forme facilement intégrable dans la pièce de carrosserie.

Suivant des modes de réalisation alternatifs de l'invention :
- la colle est ménagée dans l'au moins un interstice, et l'au moins une enveloppe expansible est noyée, au moins partiellement, dans la colle. L'enveloppe expansible est ainsi facilement fixée entre dans l'interstice entre les premier et second panneaux. Cela facilite également la localisation de l'enveloppe expansible lorsqu'on souhaite la gonfler pour démonter la pièce de carrosserie.
- la pièce de carrosserie comprend un premier interstice et un second interstice séparés par une nervure, la colle étant ménagée dans le premier interstice, et l'au moins une enveloppe expansible étant ménagée dans le second interstice. La pièce de carrosserie comprend ainsi des interstices spécifiquement dédiés respectivement à l'enveloppe expansible et à la colle, ce qui facilite l'assemblage de la pièce de carrosserie. Cela facilite également la localisation de l'enveloppe expansible lorsqu'on souhaite la gonfler pour démonter la pièce de carrosserie.
- la pièce de carrosserie comprend un premier interstice et un second interstice séparés par une nervure, la colle étant ménagée dans le premier interstice, et l'au moins une enveloppe expansible étant ménagée sur la nervure. L'enveloppe présente ainsi un encombrement réduit dans la pièce de carrosserie, ce qui contribue à réduire l'encombrement général de la pièce de carrosserie.

Avantageusement, la pièce de carrosserie forme un aileron, une porte latérale, une porte de hayon, un module de toit, un capot ou un module lumineux de véhicule automobile. L'invention est ainsi adaptée pour la réalisation de plusieurs types de pièces de carrosserie.

Avantageusement, l'au moins une enveloppe expansible présente un ou plusieurs renforts favorisant, lors d'une expansion de l'enveloppe expansible, une expansion dans une ou plusieurs directions prédéfinies.

On s'assure ainsi que l'expansion de l'enveloppe expansible permette de séparer efficacement le premier panneau du second panneau, sans qu'il ne soit nécessaire d'injecter une quantité de fluide considérable dans l'enveloppe expansible.

Avantageusement, l'au moins une enveloppe expansible est rapportée sur le premier panneau ou sur le second panneau. L'enveloppe expansible est ainsi rapportée sur un des panneaux, ce qui facilite l'assemblage de la pièce de carrosserie.

On prévoit également selon l'invention un procédé de démontage d'une pièce de carrosserie telle que définie dans ce qui précède, dans lequel on injecte un fluide ou de la mousse dans l'au moins une enveloppe expansible pour qu'elle occupe l'état gonflé.

### Brève description des figures

L'invention sera mieux comprise à la lecture de la description qui va suivre donnée uniquement à titre d'exemple et faite en se référant aux dessins annexés dans lesquels :
La [Fig. 1] est une vue en coupe d'une pièce de carrosserie selon un mode de réalisation de l'invention comprenant une enveloppe expansible dans un état dégonflé,
La [Fig. 2] est une vue en coupe de la pièce de carrosserie de la figure 1 dans laquelle l'enveloppe expansible est dans un état gonflé,
La [Fig. 3] est une vue en coupe de pièces de carrosserie selon des variantes de réalisation de l'invention,
La [Fig. 4] est une vue en coupe de pièces de carrosserie selon d'autres variantes de réalisation de l'invention,
La [Fig. 5] est une vue en section transversale d'enveloppes expansibles selon deux variantes de réalisation de l'invention, et
La [Fig. 6] est une vue schématique de l'enveloppe expansible de pièces de carrosserie selon des variantes de réalisation de l'invention.

### Description détaillée

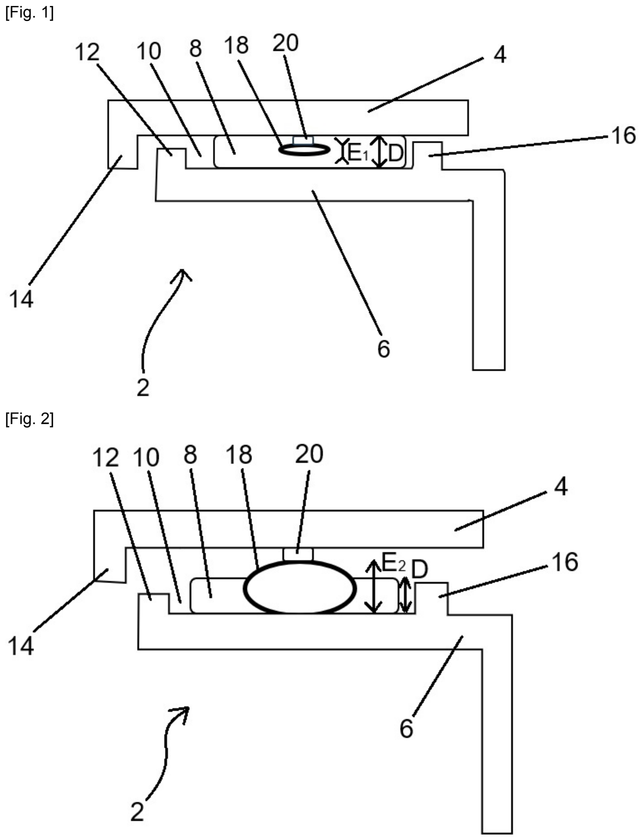

On a représenté en figure 1 une pièce de carrosserie 2 selon un mode de réalisation de l'invention. La pièce de carrosserie 2 est destinée à équiper un véhicule automobile pour former une partie de sa carrosserie extérieure. Il peut s'agir d'un aileron, d'une porte latérale, d'une porte de coffre, d'un module de toit, d'un capot, d'un module lumineux de véhicule automobile ou de toute autre partie de la carrosserie.

La pièce de carrosserie 2 comprend un premier panneau 4 et un second panneau 6 fixé au premier panneau 4. Lorsque la pièce de carrosserie 2 est montée sur un véhicule, le premier panneau 4 est situé vers l'extérieur du véhicule et est visible de l'extérieur du véhicule, tandis que le second panneau 6 est orienté vers l'intérieur du véhicule de sorte qu'il est en grande partie occulté par le premier panneau 4. En d'autres termes, le premier panneau 4 forme un panneau extérieur, tandis que le second panneau 6 forme un panneau intérieur, par exemple solidaire d'un châssis du véhicule. Le second panneau 6 est fixé au premier panneau 4 par collage au moyen d'une colle 8. A titre d'exemple non limitatif, il peut s'agir préférentiellement d'une colle du type thermofusible dans la mesure où ce type de colle est particulièrement simple et pratique à l'emploi. Dans le cas où la pièce de carrosserie 2 forme un module lumineux de véhicule automobile, le premier panneau 4 est réalisé dans un matériau transparent ou translucide, tandis que le second panneau 6 est formé par une partie d'un boîtier d'une source de lumière.

La pièce de carrosserie 2 présente un interstice 10 entre le premier panneau 4 et le second panneau 6. Ici, la colle 8 s'étend dans l'interstice 10 et en contact avec une surface inférieure du premier panneau 4 et avec une surface supérieure du second panneau 6. A l'état collé, le premier panneau 4 et le second panneau 6 sont espacés d'une distance D l'un de l'autre dans l'interstice 10.

Le second panneau 6 comprend un rebord, dit second rebord 12, permettant à la fois de partiellement délimiter l'interstice 10 et de partiellement occulter la colle 8. Le premier panneau 4 comprend un rebord, dit premier rebord 14, permettant de partiellement occulter le second rebord 12. Le premier rebord 14 et le second rebord 12 s'étendent sur une hauteur additionnée dans une direction définie par la distance D, correspondant à la direction verticale sur la figure 1, qui est supérieure à la distance D. De la sorte, la colle 8 n'est pas ou peu visible de l'extérieur de la pièce de carrosserie 2. Le second panneau 6 comprend par ailleurs une nervure 16 permettant de partiellement délimiter l'interstice 10, du côté de celui-ci opposé au second rebord 12. Ainsi, dans ce mode de réalisation, l'interstice 10 est délimité par quatre surfaces composées par la surface inférieure du premier panneau 4, la nervure 16, la surface supérieure du second panneau 6 et le second rebord 12. A titre de variante de réalisation, on peut prévoir que le second panneau 6 soit dépourvu de la nervure 16.

La pièce de carrosserie 2 comprend une enveloppe expansible 18 ménagée dans l'interstice 10, entre le premier panneau 4 et le second panneau 6. L'enveloppe expansible 18 est rapportée sur la surface inférieure du premier panneau 4, ici au moyen d'une pièce de rétention 20. En outre, l'enveloppe expansible 18 est ici au moins partiellement noyée dans la colle 8.

Dans la configuration illustrée en figure 1, l'enveloppe expansible 18 occupe un état dégonflé dans lequel elle présente une envergure E₁ inférieure ou égale à la distance D. L'envergure est mesurée dans la direction définie par la distance D, qui correspond à la direction verticale sur la figure 1. Dans le cas où le premier panneau 4 est, localement, parallèle au second panneau 6, cette direction correspond à la direction perpendiculaire à la surface inférieure du premier panneau 4 et à la direction perpendiculaire à la surface supérieure du second panneau 6.

On a représenté en figure 2 la pièce de carrosserie 2 dans une configuration différente de celle de la précédente figure. L'enveloppe expansible 18 occupe un état gonflé dans lequel elle présente une envergure E₂ strictement supérieure à E₁ et à la distance D. L'envergure est mesurée dans la direction définie par la distance D, qui correspond à la direction verticale sur la figure 1. Dans le cas où le premier panneau 4 est, localement, parallèle au second panneau 6, cette direction correspond à la direction perpendiculaire à la surface inférieure du premier panneau 4 et à la direction perpendiculaire à la surface supérieure du second panneau 6.

Le passage de la configuration de la figure 1 à celle de la figure 2 est réalisé en injectant un fluide, par exemple de l'air, de l'eau ou de l'huile pour ne citer que quelques exemples, ou de la mousse dans l'enveloppe expansible 18. L'augmentation de l'envergure de l'enveloppe expansible 18 permet de générer une force du second panneau 6 sur le premier panneau 4 ayant tendance à les écarter l'un de l'autre. Avec l'expansion et l'augmentation de cette force, la colle 8 est sollicitée en élongation dans la direction de la distance D jusqu'à sa rupture. A ce moment-là, le premier panneau 4 n'est plus fixé au second panneau 6, de sorte qu'il peut être retiré de la pièce de carrosserie 2.

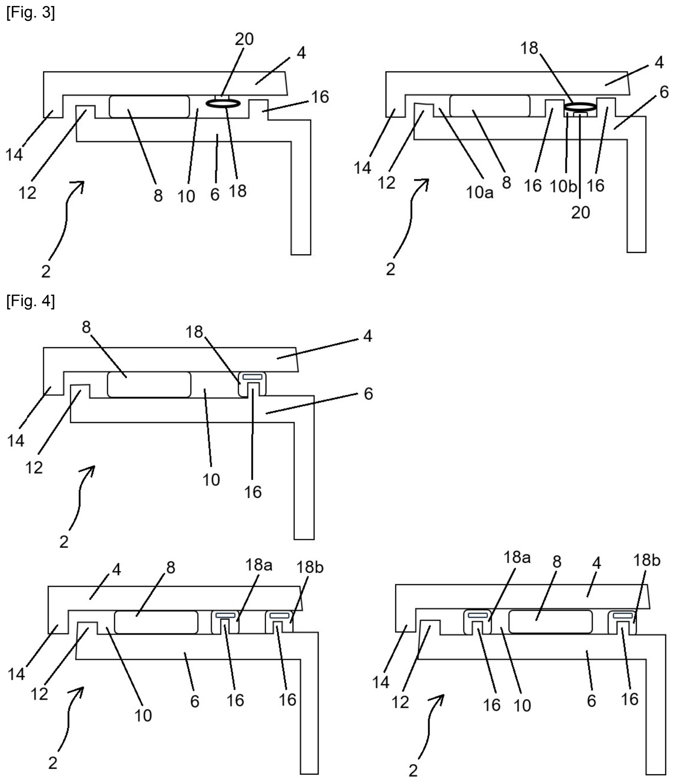

On a représenté en figure 3 deux variantes de réalisation de la pièce de carrosserie 2. Dans ce qui suit, on ne décrira que les aspects de ces variantes qui les différencient de la pièce de carrosserie des figures 1 et 2.

Dans la variante illustrée à gauche sur la figure 3, l'enveloppe expansible 18 est rapportée sur la surface inférieure du premier panneau 4, ici au moyen d'une pièce de rétention 20, mais l'enveloppe expansible 18 s'étend intégralement en dehors de la colle 8. La pièce de rétention 18 est fixée sur le premier panneau 4, par exemple par collage ou par vissage.

Dans la variante illustrée à droite sur la figure 3, le second panneau 6 comprend deux nervures 16 s'étendant toutes deux d'un côté opposé au second rebord 12 par rapport à la colle 8. De la sorte, la colle 8 s'étend dans un premier interstice 10a, et les deux nervures 16 définissent entre elles un second interstice 10b. L'enveloppe expansible 18 est rapportée sur la surface supérieure du second panneau 6, ici au moyen d'une pièce de rétention 20, dans le second interstice 10b entre les deux nervures. La pièce de rétention 18 est fixée sur le second panneau 6, par exemple par collage ou par vissage. Ces deux nervures 16 permettent ainsi de guider l'expansion de l'enveloppe expansible 18 pour s'assurer qu'il gonfle principalement dans la direction définie par la distance D, ce qui garantit une augmentation efficace de son envergure pendant l'expansion.

On a représenté en figure 4 trois variantes de réalisation de la pièce de carrosserie 2. Dans ce qui suit, on ne décrira que les aspects de ces variantes qui les différencient de la pièce de carrosserie des figures 1 et 2.

Dans la variante illustrée en haut sur la figure 4, l'enveloppe expansible 18 est ménagée sur la nervure 16 et est installée à cheval sur celle-ci.

Dans la variante illustrée en bas à gauche sur la figure 4, le second panneau 6 comprend deux nervures 16 s'étendant toutes deux d'un côté opposé au second rebord 12 par rapport à la colle 8. De la sorte, la colle 8 s'étend dans un premier interstice 10a, et les deux nervures 16 définissent entre elles un second interstice 10b. La pièce de carrosserie 2 comprend deux enveloppes expansibles 18, chacune des enveloppes expansibles 18 étant ménagée sur une des nervures 16 et est installée à cheval sur celle-ci. Dans ce cas, on peut prévoir que la pièce de carrosserie 2 comprennent deux pièces de rétention 20, chacune couplée à l'une des deux enveloppes expansibles 18 et chacune présentant une forme et des dimensions lui permettant de s'insérer sur une des nervures 16, par exemple en force, en encliquetage ou par collage.

Dans la variante illustrée en bas à droite sur la figure 4, le second panneau 6 comprend deux nervures 16 s'étendant de part et d'autre de la colle 8. De la sorte, la colle 8 s'étend entre les deux nervures 16. La pièce de carrosserie 2 comprend deux enveloppes expansibles 18, chacune des enveloppes expansibles 18 étant ménagée sur une des nervures 16 et est installée à cheval sur celle-ci.

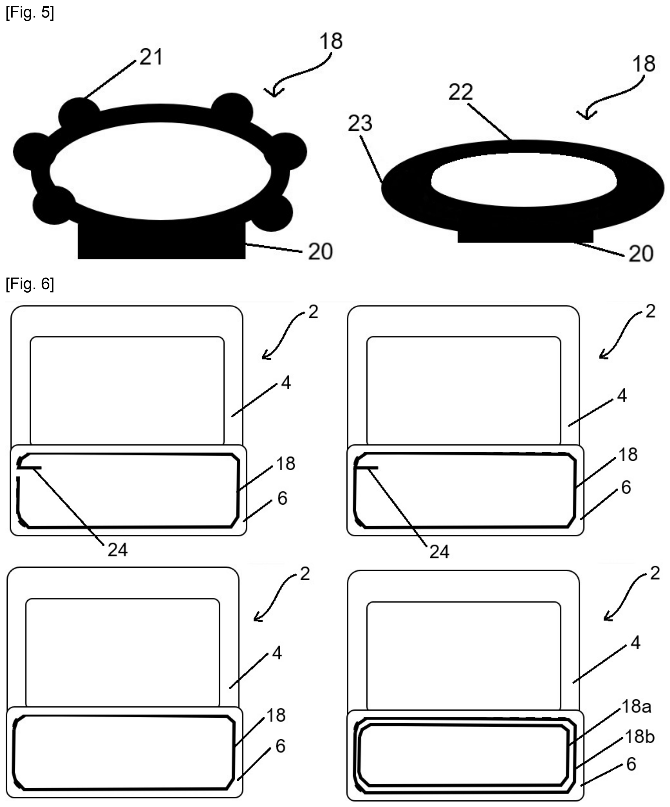

On a représenté en figure 5 deux exemples de réalisation de la section transversale, ou profil, de l'enveloppe expansible 18.

Le profil à gauche de la figure 5 présente une section droite de forme générale d'un ovale ayant un grand axe horizontal et un petit axe vertical. En outre, la paroi de l'enveloppe expansible 18 comprend plusieurs renforts 21 formant des zones de surépaisseur de la paroi. Ici, l'enveloppe expansible 18 comprend six renforts 21 répartis de manière symétrique par rapport à un axe vertical. Lors d'une expansion de l'enveloppe expansible 18, elle a tendance à se déformer entre les renforts 21 étant donné que ceux-ci confèrent aux zones de la paroi de l'enveloppe expansible 18 en regard des renforts 21 une résistance plus grande à la déformation. On comprend ainsi que les renforts 21 permettent de guider l'expansion de l'enveloppe expansible 18 entre ceux-ci. Ici, les renforts 21 sont d'un seul tenant avec le reste de la paroi de l'enveloppe expansible 18 et sont réalisés dans le même matériau que le reste de la paroi. Selon une variante de réalisation, les renforts peuvent être réalisés sous la forme d'éléments structurels rapportés sur la paroi et fixés sur celle-ci. Selon cette variante, les renforts peuvent être des éléments structurels distincts, ou bien une unique armature rapportée sur la paroi de l'enveloppe expansible.

Le profil à droite de la figure 5 présente une section droite de forme générale d'un ovale ayant un grand axe horizontal et un petit axe vertical. En outre, la paroi de l'enveloppe expansible 18 présente une paroi à épaisseur non uniforme. Sur le côté supérieur de la section, la paroi présente une petite épaisseur 22, tandis que sur le reste de la section, la présente une grande épaisseur 23 supérieure à la petite épaisseur 22. La grande épaisseur est par exemple plus de deux fois supérieure à la petite épaisseur 22. Lors d'une expansion de l'enveloppe expansible 18, elle a tendance à se déformer au voisinage de la zone à petite épaisseur 22, étant donné que celle-ci présente résistance à la déformation inférieure à la résistance à la déformation dans le reste de la section, du fait du changement d'épaisseur de la paroi. On comprend ainsi que l'enveloppe expansible aura tendance à plus de déformer davantage vers le haut (en référence à la figure) que dans les autres directions.

On a représenté en figure 6 différents exemples de réalisation de l'enveloppe expansible 18. Dans l'exemple de réalisation illustré en haut à gauche de la figure 6, l'enveloppe expansible 18 est de forme générale tube de section droite constante présentant une extrémité fermée et une extrémité munie d'un embout d'expansion 24. L'expansion de cette enveloppe expansible 18 se fait en connectant des moyens d'injection de fluide, comprenant par exemple une buse, à l'embout d'expansion 24 et en remplissant l'enveloppe expansible 18 de fluide. Dans l'exemple de réalisation illustré en haut à droite de la figure 6, l'enveloppe expansible 18 est en forme générale de tube de section droite constante fermé sur lui-même et est muni d'un embout de d'expansion 24. L'enveloppe expansible 18 présente ainsi une forme similaire à celle d'une chambre à air pour roue de vélocipède. L'expansion de cette enveloppe expansible 18 se fait en connectant des moyens d'injection de fluide, comprenant par exemple une buse, à l'embout d'expansion 24 et en remplissant l'enveloppe expansible 18 de fluide.

Dans l'exemple de réalisation illustré en bas à gauche de la figure 6, l'enveloppe expansible 18 est en forme générale de tube de section droite constante fermé sur lui-même, dépourvu d'embout d'expansion. L'expansion de cette enveloppe expansible 18 se fait en perçant l'enveloppe expansible 18 à l'aide de moyens d'injection, comprenant par exemple une aiguille, et en remplissant l'enveloppe expansible 18 de fluide. Dans l'exemple de réalisation illustré en bas à droite de la figure 6, la pièce de carrosserie 2 comprend une enveloppe expansible primaire 18a et une enveloppe expansible secondaire 18b, chacune en forme générale de tube de section droite constante fermé sur lui-même. Ces deux enveloppes expansibles 18a, 18b s'étendent, localement, l'une parallèlement à l'autre. En d'autres termes, elles prennent une forme similaire dans la pièce de carrosserie 2 et sont adjacentes l'une à l'autre. L'expansion de ces enveloppes expansibles primaire et secondaire 18a, 18b se fait en les perçant à l'aide de moyens d'injection, comprenant par exemple une aiguille, et en remplissant les enveloppes expansibles primaire et secondaire 18a, 18b de fluide.

L'invention n'est pas limitée aux modes de réalisation présentés et d'autres modes de réalisation apparaîtront clairement à l'homme du métier. Il est notamment possible de combiner entre elles des variantes de réalisation telles que représentées sur les différentes figures et décrites dans ce qui précède.

### Liste de références

2 : pièce de carrosserie
4 : premier panneau
6 : second panneau
8 : colle
10, 10a, 10b : interstice
12 : second rebord
14 : premier rebord
16 : nervure
18, 18a, 18b : enveloppe expansible
20 : pièce de rétention
21 : renfort
22 : petite épaisseur
23 : grande épaisseur
24 : embout d'expansion
D : distance
E₁, E₂ : envergure

## Revendications

1. Pièce de carrosserie (2) pour véhicule automobile, **caractérisé en ce qu'**elle comprend :
- un premier panneau (4),
- un second panneau (6) collé au premier panneau (4) au moyen d'une colle (8),
- au moins un interstice (10) entre le premier panneau (4) et le second panneau (6), le premier panneau (4) et le second panneau (6) étant situés à une distance D l'un de l'autre dans l'au moins un interstice (10), et
- au moins une enveloppe expansible (18) s'étendant dans l'au moins un interstice (10), l'au moins une enveloppe expansible (18) étant dimensionnée de manière à pouvoir occuper un état dégonflé, dans lequel elle présente une envergure E₁, et un état gonflé, dans lequel elle présente une envergure E₂ strictement supérieure à la distance D et strictement supérieure à E₁.

2. Pièce de carrosserie (2) selon la revendication 1, dans laquelle l'au moins une enveloppe expansible (18) est de forme générale de tube de section droite constante.

3. Pièce de carrosserie (2) selon la revendication 1, dans laquelle l'au moins une enveloppe expansible (18) est en forme générale de tube de section droite constante fermé sur lui-même.

4. Pièce de carrosserie (2) selon l'une quelconque des revendications précédentes, dans laquelle l'au moins une enveloppe expansible (18) est munie d'un embout d'expansion (24).

5. Pièce de carrosserie (2) selon l'une quelconque des revendications précédentes, comprenant une enveloppe expansible primaire (18a) et une enveloppe expansible secondaire (18b).

6. Pièce de carrosserie (2) selon la revendication précédente, dans laquelle l'enveloppe expansible primaire (18a) et l'enveloppe expansible secondaire (18b) sont toutes deux en forme générale de tube fermé sur lui-même de section droite constante, et s'étendent, localement, l'une parallèlement à l'autre.

7. Pièce de carrosserie (2) selon l'une quelconque des revendications 1 à 6, dans laquelle la colle (8) est ménagée dans l'au moins un interstice (10), et l'au moins une enveloppe expansible (18) est noyée, au moins partiellement, dans la colle (8).

8. Pièce de carrosserie (2) selon l'une quelconque des revendications 1 à 6, comprenant un premier interstice (10a) et un second interstice (10b) séparés par une nervure (16), la colle (8) étant ménagée dans le premier interstice (10a), et l'au moins une enveloppe expansible (18) étant ménagée dans le second interstice (10b).

9. Pièce de carrosserie (2) selon l'une quelconque des revendications 1 à 6, comprenant un premier interstice (10a) et un second interstice (10b) séparés par une nervure (16), la colle (8) étant ménagée dans le premier interstice (10a), et l'au moins une enveloppe expansible (18) étant ménagée sur la nervure (16).

10. Pièce de carrosserie (2) selon l'une quelconque des revendications précédentes, formant un aileron, une porte latérale, une porte de hayon, un module de toit, un capot ou un module lumineux de véhicule automobile.

11. Pièce de carrosserie (2) selon l'une quelconque des revendications précédentes, dans laquelle l'au moins une enveloppe expansible (18) présente un ou plusieurs renforts (21) favorisant, lors d'une expansion de l'enveloppe expansible (18), une expansion dans une ou plusieurs directions prédéfinies.

12. Pièce de carrosserie (2) selon l'une quelconque des revendications précédentes, dans lequel l'au moins une enveloppe expansible (18) est rapportée sur le premier panneau (4) ou sur le second panneau (6).

13. Procédé de démontage d'une pièce de carrosserie (2) selon l'une quelconque des revendications précédentes, dans lequel on injecte un fluide ou de la mousse dans l'au moins une enveloppe expansible (18) pour qu'elle occupe l'état gonflé.
